# EUROPEAN PATENT APPLICATION

(11) **EP 3 471 072 A1**
(43) Date of publication of application: **17.04.2019**
(21) Application number: 18183507.5
(22) Date of filing: 13.07.2018
(51) Int. Cl.: G08B 13/181, G08B 13/24

(54) **SYSTEM AND METHOD FOR PROVIDING A PLURALITY OF ALARM LEVELS FOR A MOTION DETECTOR MONITORING A REGION**

(30) Priority: 12.10.2017 US 201715782038
(71) Applicant: Honeywell International Inc., Morris Plains, NJ New Jersey 07950 (US)
(72) Inventor: QIN, Lei, Morris Plains, NJ New Jersey 07950 (US); ZHAO, TianFeng, Morris Plains, NJ New Jersey 07950 (US); LIN, Jianhua, Morris Plains, NJ New Jersey 07950 (US)
(74) Representative: Houghton, Mark Phillip

(57) **Abstract**

Systems and methods for providing a plurality of alarm levels for a motion detector monitoring a region are provided. Some methods can include a microwave sensing device detecting a presence of an intruder in a monitored region, a microcontroller coupled to the microwave sensing device determining a position of the intruder in the monitored region based on signals from the microwave sensing device, and the microcontroller triggering one of a plurality of alarm levels based on the position of the intruder in the monitored region.

## Description

### FIELD

The present invention relates generally to motion detectors. More particularly, the present invention relates to systems and methods for providing a plurality of alarm levels for a motion detector monitoring a region.

### BACKGROUND

Motion detectors known in the art produce false alarms, which increase cost. For example, known motion detectors rely on detecting an intruder's motion, which can be unreliable because a motion detector can produce a false alarm when detecting the motion of a large object, such as a passing train or truck, at a far distance or when detecting the motion of a small object, such as a fly or a butterfly, at a close distance.

Furthermore, known motion detectors monitor the intruder with binary output once a sensitivity threshold has been exceeded. Accordingly, known motion detectors are not reliable or accurate enough to avoid the unnecessary costs caused by the false alarms identified above.

In view of the above, there is a continuing, ongoing need for improved systems and methods.

### BRIEF DESCRIPTION OF THE DRAWINGS

FIG. 1 is a block diagram of a system in accordance with the disclosed invention;
FIG. 2 is a flow diagram of a method in accordance with the disclosed invention;
FIG. 3 is a block diagram of an exemplary monitored region in accordance with the disclosed invention; and
FIG. 4 is a block diagram of an exemplary monitored region in accordance with the disclosed invention.

### DETAILED DESCRIPTION

While this invention is susceptible of an embodiment in many different forms, there are shown in the drawings and will be described herein in detail specific embodiments thereof with the understanding that the present disclosure is to be considered as an exemplification of the principles of the invention. It is not intended to limit the invention to the specific illustrated embodiments.

The invention disclosed herein can include systems and methods for providing a plurality of alarm levels for a motion detector monitoring a region. For example, the invention disclosed herein can include a microwave sensing device and can provide the plurality of alarm levels based on the position of an intruder in the monitored region.

In the invention, if systems and methods disclosed herein detect the intruder in a first area in the monitored region that is remote from the microwave sensing device, then systems and methods disclosed herein can trigger a first alarm level, such as a voice warning. In the invention, the voice warning can include instructions for the intruder to follow to avoid increased alarm levels, such as "You are entering into a restricted area. Please stop." However, if systems and methods disclosed herein detect the intruder in a second area in the monitored region that is closer to the microwave sensing device than the first area, then systems and methods disclosed herein can trigger a second alarm level, such as a siren or the transmission of an informational message to a central monitoring station. However, if systems and methods disclosed herein detect the intruder in a third area of the monitored region that is closer to the microwave sensing device than the second area, then systems and methods disclosed herein can trigger a third alarm level, such as an alarm to solicit an on-site visit to the monitored region by a third party, such as emergency personnel. Accordingly, systems and methods disclosed herein can avoid the costs associated with false alarms soliciting an on-site visit to the monitored region by the third party until systems and methods disclosed herein detect the position of the intruder in an area of the monitored region closest to the microwave sensing device.

In the invention, each of the plurality of alarm levels and each of the areas in the monitored region can be customized by a user. Furthermore, in the invention, one or more of the plurality of alarm levels can trigger activation of other devices in the monitored region, such as video monitoring devices, lighting control devices, industrial control devices, access control system devices, and the like.

In the invention, in addition to or as an alternate to monitoring and determining the position of the intruder, systems and methods disclosed herein can monitor and determine a speed of the intruder. In the invention, if the speed of the intruder is outside of a predetermined range, then systems and methods disclosed herein can ignore the intruder.

In the invention, in addition to or as an alternate to monitoring and determining the position or the speed of the intruder, systems and methods disclosed herein can monitor and determine a moving direction of the intruder. In the invention, if the moving direction of the intruder fails to match a predetermined direction, then systems and methods disclosed herein can ignore the intruder.

Systems and methods are described herein in connection with motion detectors. However, it is to be understood that the invention disclosed herein are not so limited and can be used in connection with any other security device as would be known by one of ordinary skill in the art. For example, systems and methods disclosed herein can be used in connection with controlling a door of an automobile based on the position of a detected intruder relative to the automobile.

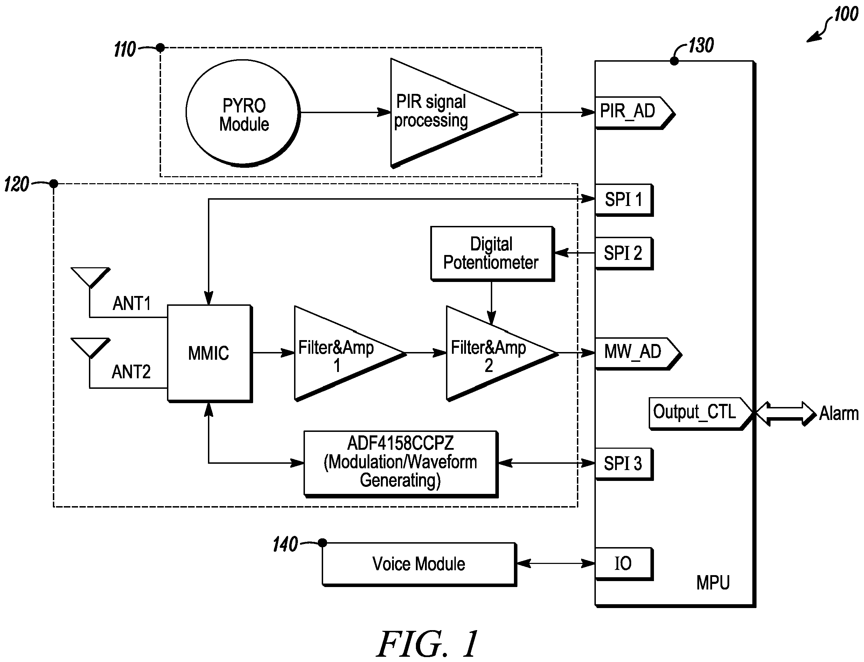

FIG. 1 is a block diagram of a system 100 in accordance with the disclosed invention. As seen in FIG. 1, the system 100 can include a PIR sensing device 110, a microwave sensing device 120, and a voice output device 140 coupled to a microcontroller or microprocessor 130.

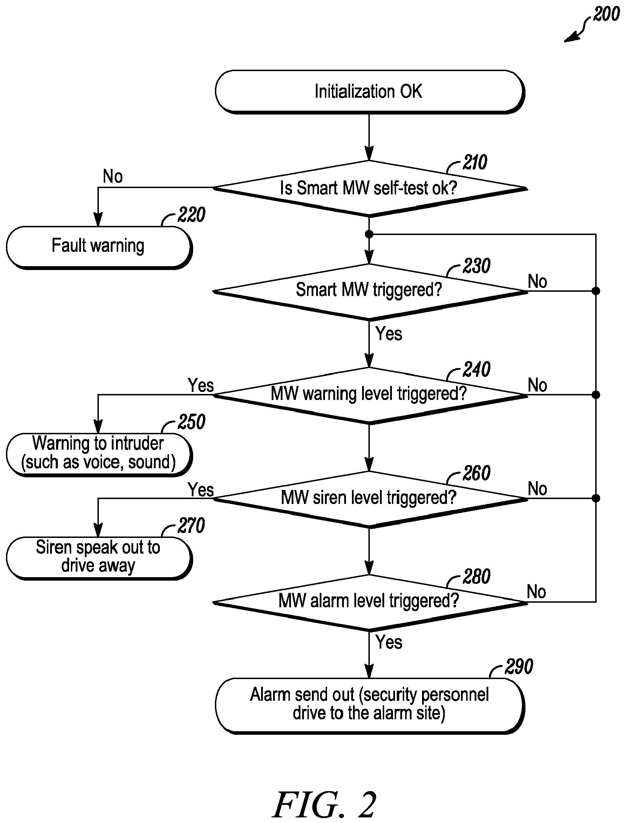

In the invention, the microwave sensing device 120 can be based on a monolithic microwave integrated circuit (MMIC), and in the invention, the microcontroller 130 can transmit a VCO control signal to a modulation/waveform generating module of the microwave sensing device 120 to drive the monolithic microwave integrated circuit. Furthermore, in the invention, the microwave sensing device 120 can include a digital potentiometer that can be controlled by the microcontroller 130 and can be used to adjust the gain of the microwave intermediate frequency of signal processing circuitry in the microwave sensing device 120. Further still, in the invention, the microcontroller 130 can sample the processed microwave intermediate frequency to determine the intruder's position, speed, and/or moving direction and, based thereon, which one of the plurality of alarm levels to trigger as described in connection with the method 200 of FIG. 2. For example, when the microcontroller 130 triggers one of the plurality of alarm levels that includes an audio component, the microcontroller 130 can activate the voice output device 140 to emit a voice warning, a siren, or the like. A voice warning is preferably a verbal warning provided by an annunciator of the system.

FIG. 2 is a flow diagram of a method 200 in accordance with the disclosed invention. As seen in FIG. 2, the method 200 can include determining whether a self-test of the microwave sensing device 120 passes as in 210. If not, then the method 200 can include activating a fault warning as in 220.

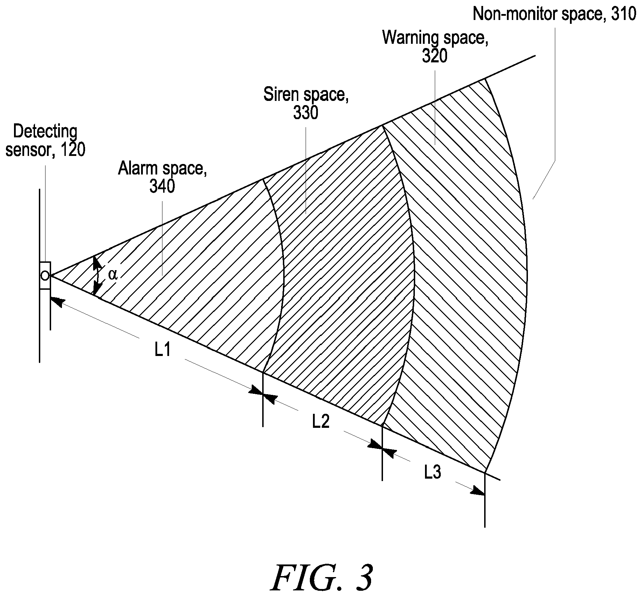

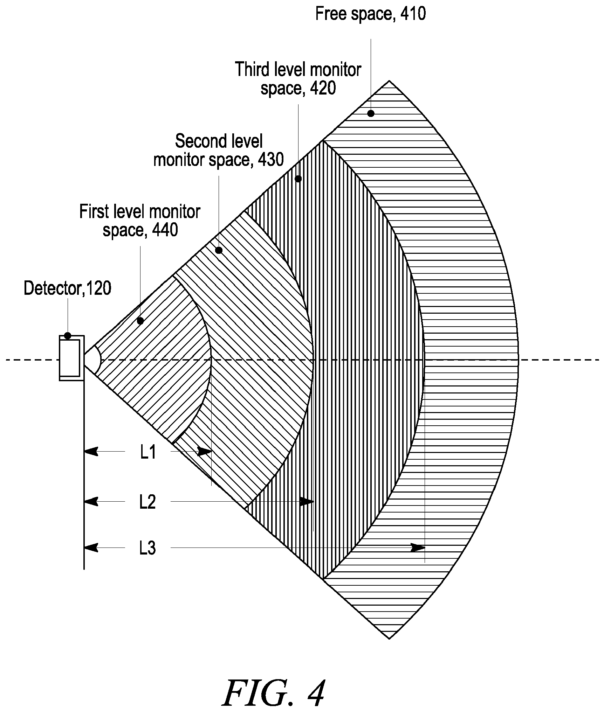

However, when the method 200 determines that the self-test of the microwave sensing device 120 passes as in 210, the method 200 can include determining whether the microwave sensing device 120 has been triggered as in 230. If not, for example, when all intruders are outside of the range of the microwave sensing device 120, such as in a non-monitored space 310 as in FIG. 3 or a free space 410 as in FIG. 4, then the method 200 can continue determining whether the microwave sensing device 120 has been triggered as in 230.

When the method 200 determines that the microwave sensing device 120 has been triggered as in 230, the method 200 can include determining whether a warning level of the plurality of alarm levels has been triggered as in 240, for example, based on the microwave sensing device 120 detecting the intruder in a warning space 320 as in FIG. 3 or a third level of monitored space 420 as in FIG. 4. If not, then the method 200 can continue determining whether the microwave sensing device 120 has been triggered as in 230. However, if the method 200 determines that the warning level has been triggered as in 240, then the method 200 can include activating a voice warning as in 250.

After the method 200 determines whether the warning level has been triggered as in 240, the method 200 can include determining whether a siren level of the plurality of alarms has been triggered as in 260, for example, based on the microwave sensing device 120 detecting the intruder in a siren space 330 as in FIG. 3 or a second level of monitored space 430 as in FIG. 4. If not, then the method 200 can continue determining whether the microwave sensing device 120 has been triggered as in 230. However, if the method 200 determines that the siren level has been triggered as in 260, then the method 200 can include activating a siren as in 270.

After the method 200 determines whether the siren level has been triggered as in 260, the method 200 can include determining whether an alarm level of the plurality of alarms has been triggered as in 280, for example, based on the microwave sensing device 120 detecting the intruder in an alarm space 340 as in FIG. 3 or a third level of monitored space 440 as in FIG. 4. If not, then the method 200 can continue determining whether the microwave sensing device 120 has been triggered as in 230. However, if the method 200 determines that the siren level has been triggered as in 280, the method 200 can include transmitting an alarm as in 290.

Although the invention has been described in detail above, other modifications are possible. For example, the logic flows described above do not require the particular order described or sequential order to achieve desirable results. Other steps may be provided, steps may be eliminated from the described flows, and other components may be added to or removed from the described systems. Other embodiments may be within the scope of the invention.

From the foregoing, it will be observed that numerous variations and modifications may be effected without departing from the spirit and scope of the invention. It is to be understood that no limitation with respect to the specific system or method described herein is intended or should be inferred. It is, of course, intended to cover all such modifications as fall within the spirit and scope of the invention.
The numbered paragraphs below form part of the disclosure, the numbering referring to other paragraphs:
1. A method comprising:
   a microwave sensing device detecting a presence of an intruder in a monitored region;
   a microcontroller coupled to the microwave sensing device determining a position of the intruder in the monitored region based on signals from the microwave sensing device; and
   the microcontroller triggering one of a plurality of alarm levels based on the position of the intruder in the monitored region as determined.
2. The method of 1 further comprising the microcontroller triggering a first of the plurality of alarm levels when the microcontroller determines the position of the intruder to be in a first area of the monitored region that is remote from the microwave sensing device.
3. The method of 2 wherein the first of the plurality of alarm levels includes a voice warning.
4. The method of 2 or 3 further comprising the microcontroller triggering a second of the plurality of alarm levels when the microcontroller determines the position of the intruder to be in a second area of the monitored region that is closer than the first area to the microwave sensing device.
5. The method of 4 wherein the second of the plurality of alarm levels includes a siren or a message to a central monitoring station.
6. The method of 4 or 5 further comprising the microcontroller triggering a third of the plurality of alarm levels when the microcontroller determines the position of the intruder to be in a third area of the monitored region that is closer than the first area and the second area to the microwave sensing device and that is proximate the microwave sensing device.
7. The method of 6 wherein the third of the plurality of alarm levels includes an alarm to solicit an on-site visit to the monitored region by a third party.
8. The method of any of 1 to 7 further comprising:
   the microcontroller determining a speed of the intruder in the monitored region based on the signals from the microwave sensing device; and
   the microcontroller triggering the one of the plurality of alarm levels based on the position and the speed of the intruder in the monitored region.
9. The method of any of 1 to 8 further comprising:
   the microcontroller determining a moving direction of the intruder in the monitored region based on the signals from the microwave sensing device; and
   the microcontroller triggering the one of the plurality of alarm levels based on the position and the moving direction of the intruder in the monitored region.
10. The method of any of 1 to 9 further comprising:
   the microcontroller driving an integrated circuit of the microwave sensing device; and
   the microcontroller adjusting a gain of an intermediate frequency of signal processing circuitry of the microwave sensing device.
11. A system comprising:
   a microwave sensing device in a monitored region; and
   a microcontroller coupled to the microwave sensing device,
   wherein the microwave sensing device detects a presence of an intruder in the monitored region,
   wherein the microcontroller determines a position of the intruder in the monitored region based on signals from the microwave sensing device, and
   wherein the microcontroller triggers one of a plurality of alarm levels based on the position of the intruder in the monitored region.
12. The system of 11 wherein the microcontroller triggers a first of the plurality of alarm levels when the microcontroller determines the position of the intruder to be in a first area of the monitored region that is remote from the microwave sensing device.
13. The system of 12 wherein the first of the plurality of alarm levels includes a voice warning.
14. The system of 12 or 13 wherein the microcontroller triggers a second of the plurality of alarm levels when the microcontroller determines the position of the intruder to be in a second area of the monitored region that is closer than the first area to the microwave sensing device.
15. The system of 14 wherein the second of the plurality of alarm levels includes a siren or a message to a central monitoring station.
16. The system of 14 or 15 wherein the microcontroller triggers a third of the plurality of alarm levels when the microcontroller determines the position of the intruder to be in a third area of the monitored region that is closer than the first area and the second area to the microwave sensing device and that is proximate the microwave sensing device.
17. The system of 16 wherein the third of the plurality of alarm levels includes an alarm to solicit an on-site visit to the monitored region by a third party.
18. The system of any of 11 to 17 wherein the microcontroller determines a speed of the intruder in the monitored region based on the signals from the microwave sensing device, and wherein the microcontroller triggers the one of the plurality of alarm levels based on the position and the speed of the intruder in the monitored region.
19. The system of any of 11 to 18 wherein the microcontroller determines a moving direction of the intruder in the monitored region based on the signals from the microwave sensing device, and wherein the microcontroller triggers the one of the plurality of alarm levels based on the position and the moving direction of the intruder in the monitored region.
20. The system of any of 11 to 19 further comprising:
   an integrated circuit of the microwave sensing device; and
   signal processing circuitry of the microwave sensing device,
   wherein the microcontroller drives the integrated circuit, and
   wherein the microcontroller adjusts a gain of an intermediate frequency of the signal processing circuitry.

## Claims

1. A method comprising:
a microwave sensing device detecting a presence of an intruder in a monitored region;
a microcontroller coupled to the microwave sensing device determining a position of the intruder in the monitored region based on signals from the microwave sensing device; and
the microcontroller triggering one of a plurality of alarm levels based on the position of the intruder in the monitored region as determined.

2. The method of claim 1 further comprising the microcontroller triggering a first of the plurality of alarm levels when the microcontroller determines the position of the intruder to be in a first area of the monitored region that is remote from the microwave sensing device.

3. The method of claim 2 wherein the first of the plurality of alarm levels includes a verbal warning provided by an annunciator.

4. The method of claim 2 or claim 3 further comprising the microcontroller triggering a second of the plurality of alarm levels when the microcontroller determines the position of the intruder to be in a second area of the monitored region that is closer than the first area to the microwave sensing device.

5. The method of claim 4 wherein the second of the plurality of alarm levels includes activating a siren or sending a message to a central monitoring station.

6. The method of claim 4 or claim 5 further comprising the microcontroller triggering a third of the plurality of alarm levels when the microcontroller determines the position of the intruder to be in a third area of the monitored region that is closer than the first area and the second area to the microwave sensing device and that is proximate the microwave sensing device.

7. The method of claim 6 wherein the third of the plurality of alarm levels includes providing an alarm for soliciting an on-site visit to the monitored region by a third party.

8. The method of any preceding claim further comprising:
the microcontroller determining a speed of the intruder in the monitored region based on the signals from the microwave sensing device; and
the microcontroller triggering the one of the plurality of alarm levels based on the position and the speed of the intruder in the monitored region.

9. The method of any preceding claim further comprising:
the microcontroller determining a moving direction of the intruder in the monitored region based on the signals from the microwave sensing device; and
the microcontroller triggering the one of the plurality of alarm levels based on the position and the moving direction of the intruder in the monitored region.

10. The method of any preceding claim further comprising:
the microcontroller driving an integrated circuit of the microwave sensing device; and
the microcontroller adjusting a gain of an intermediate frequency of signal processing circuitry of the microwave sensing device.

11. A system comprising:
a microwave sensing device in a monitored region; and
a microcontroller coupled to the microwave sensing device,
wherein the microwave sensing device detects a presence of an intruder in the monitored region,
wherein the microcontroller determines a position of the intruder in the monitored region based on signals from the microwave sensing device, and
wherein the microcontroller triggers one of a plurality of alarm levels based on the position of the intruder in the monitored region.

12. The system of claim 11 wherein the microcontroller triggers a first of the plurality of alarm levels when the microcontroller determines the position of the intruder to be in a first area of the monitored region that is remote from the microwave sensing device.

13. The system of claim 12 wherein the first of the plurality of alarm levels includes a verbal warning provided by an annunciator of the system.

14. The system of claim 12 or claim 13 wherein the microcontroller triggers a second of the plurality of alarm levels when the microcontroller determines the position of the intruder to be in a second area of the monitored region that is closer than the first area to the microwave sensing device.

15. The system of claim 14 wherein the second of the plurality of alarm levels includes a siren or a message to a central monitoring station.

## Amended claims

### Amended claims in accordance with Rule 137(2) EPC.

1. A method comprising:
a microwave sensing device detecting a presence of an intruder in a monitored region;
based on signals from the microwave sensing device, a microcontroller coupled to the microwave sensing device determining a position of the intruder in a first area of the monitored region, a second area of the monitored region closer to the microwave sensing device than the first area, or a third area of the monitored region closer to the microwave sensing device than the second area; and
the microcontroller triggering a first alarm level when the intruder is in the first area, a second alarm level when the intruder is in the second area, and a third alarm level when the intruder is in the third area.

2. The method of claim 1 wherein the first alarm level includes a verbal warning provided by an annunciator.

3. The method of claim 1 or 2 wherein the second alarm level includes activating a siren or sending a message to a central monitoring station.

4. The method of any preceding claim wherein the third alarm level includes providing an alarm for soliciting an on-site visit to the monitored region by a third party.

5. The method of any preceding claim further comprising:
based on the signals from the microwave sensing device, the microcontroller determining a speed of the intruder in the monitored region; and
the microcontroller triggering the first alarm level, the second alarm level, or the third alarm level based on the position and the speed of the intruder in the monitored region.

6. The method of any preceding claim further comprising:
based on the signals from the microwave sensing device, the microcontroller determining a moving direction of the intruder in the monitored region; and
the microcontroller triggering the first alarm level, the second alarm level, or the third alarm level based on the position and the moving direction of the intruder in the monitored region.

7. The method of any preceding claim further comprising:
the microcontroller driving an integrated circuit of the microwave sensing device; and
the microcontroller adjusting a gain of an intermediate frequency of signal processing circuitry of the microwave sensing device.

8. A system comprising:
a microwave sensing device in a monitored region; and
a microcontroller coupled to the microwave sensing device,
wherein the microwave sensing device detects a presence of an intruder in the monitored region,
wherein, based on signals from the microwave sensing device, the microcontroller determines a position of the intruder in a first area of the monitored region, a second area of the monitored region closer to the microwave sensing device than the first area, or a third area of the monitored region, and
wherein the microcontroller triggers a first alarm level when the intruder is in the first area, a second alarm level when the intruder is in the second area, and a third alarm level when the intruder is in the third area.

9. The system of claim 8 wherein the first alarm level includes a verbal warning provided by an annunciator.

10. The system of claim 8 wherein the second alarm level includes a siren or a message to a central monitoring station.
